# EUROPEAN PATENT APPLICATION

(11) **EP 4 778 694 A1**
(43) Date of publication of application: **22.07.2026**
(21) Application number: 25215512.2
(22) Date of filing: 13.11.2025
(51) Int. Cl.: B29C 33/20, B29C 33/50, B29C 43/36, B29C 70/44

(54) **SYSTEMS AND METHODS FOR PROCESSING MATERIALS USING EXPANDABLE TOOLING**

(30) Priority: 17.01.2025 US 202519027428
(71) Applicant: The Boeing Company, Arlington, VA 22202 (US)
(72) Inventor: Wang, Xiaoxi, Arlington, VA, 22202 (US); Soderlund, Tim H., Arlington, VA, 22202 (US); Tracey, Ashley C., Arlington, VA, 22202 (US)
(74) Representative: Hoffmann Eitle

(57) **Abstract**

A system (100) for processing a workpiece (200) includes a constraining container(110), a pressure-triggered coupling (122), and an expandable medium (130). The constraining container includes an interior volume (112) and is configured to enclose at least a portion of the workpiece to be processed. The pressure-triggered coupling is configured to secure the constraining container in a closed configuration and is configured to release the constraining container upon an interior pressure (250) of the interior volume of the constraining container reaching a trigger pressure (252). The expandable medium is configured to be disposed within the interior volume between at least a portion of the constraining container and at least a portion of the workpiece and is configured to expand such that the expandable medium applies a positive pressure (254) to the constraining container and the workpiece.

## Description

### FIELD

The present disclosure relates generally to material processing and, more particularly, to systems and methods for fabricating, bonding, and repairing materials using expandable materials and tooling.

### BACKGROUND

Many manufactured components require one or more fabrication processes, such as bonding, curing (e.g., thermosets), consolidation (e.g., thermoplastics), or other processing operations that typically require control of temperatures and/or pressures. Often, large industrial equipment, such as an autoclave, is used for these processes and provide the application of both temperature and pressure under controlled conditions. However, the equipment required for sufficient processing temperatures and pressures is typically large, complex, expensive, and can lead to bottlenecks in the manufacturing process. Additionally, large processing equipment is not typically available for spot processing, repair, and remote processing needs. Accordingly, those skilled in the art continue with research and development efforts in material fabrication.

### SUMMARY

Disclosed are examples of a system and a method for processing a workpiece. The following is a non-exhaustive list of examples, which may or may not be claimed, of the subject matter according to the present disclosure.

In an example, the disclosed system includes a constraining container that includes an interior volume and that is configured to enclose at least a portion of a workpiece to be processed. The system includes a pressure-triggered coupling that is configured to secure the constraining container in a closed configuration and that is configured to release the constraining container upon an interior pressure of the interior volume of the constraining container reaching a trigger pressure. The system includes an expandable medium that is configured to be disposed within the interior volume between at least a portion of the constraining container and at least a portion of the workpiece and that is configured to expand such that the expandable medium applies a positive pressure to the constraining container and the workpiece.

In another example, the disclosed system includes a constraining container that is configured to enclose at least a portion of a workpiece to be processed and that includes a plurality of container walls that form an interior volume. The system includes a pressure-triggered coupling that is configured to secure two of the container walls together and that is configured to release the two of the container walls upon an interior pressure of the interior volume reaching a trigger pressure. The system includes a pressure plug that is coupled to one of the container walls and is movable relative to the one of the container walls such that a portion of the pressure plug is disposed in the interior volume to modify the interior volume. The system includes a tensioner that is configured to selectively apply a tension between two of the container walls to control the interior pressure. The system includes a viewport formed in one of the container walls. The system includes a pressure-responsive shutter that is configured to cover the viewport upon the interior pressure of the interior volume of the constraining container reaching a processing pressure. The system includes an expandable medium that is configured to be disposed within the interior volume between at least a portion of the container walls and at least a portion of the workpiece and that is configured to expand such that the expandable medium applies a positive pressure to the container walls and the workpiece.

In an example, the disclosed method includes steps of: (1) enclosing at least a portion of the workpiece in an interior volume of a constraining container; (2) applying an expandable medium in the interior volume between at least a portion of the constraining container and at least a portion of the workpiece; (3) securing the constraining container in a closed configuration using a pressure-triggered coupling; (4) expanding the expandable medium to increase an interior pressure of the constraining container and apply a positive pressure to the workpiece; and (5) automatically releasing the constraining container using the pressure-triggered coupling upon the interior pressure of the constraining container reaching a trigger pressure.

Other examples of the system and the method will become apparent from the following detailed description, the accompanying drawings, and the appended claims.

### BRIEF DESCRIPTION OF THE DRAWINGS

Fig. 1 is a schematic block diagram of an example of a system for processing materials;
Fig. 2 is a flow diagram of an example of a method for processing materials;
Fig. 3 is a schematic illustration of the example of the system, depicting a workpiece and expandable medium in an unexpanded state within a constraining container;
Fig. 4 is a schematic illustration of the example of the system shown in Fig. 3, depicting the expandable medium in an expanded state;
Fig. 5 is a schematic illustration of an example of the system;
Fig. 6 is a schematic illustration of an example of the system;
Fig. 7 is a schematic illustration of an example of the system;
Fig. 8 is a schematic illustration of an example of the system;
Fig. 9 is a schematic illustration of an example of the system;
Fig. 10A is a schematic illustration of an example of the system;
Fig. 10B is a schematic illustration of an example of a tension device of the system shown in Fig. 10A;
Fig. 11 is a schematic illustration of an example of the system;
Fig. 12 is a schematic illustration of an example of the system;
Fig. 13 is a schematic illustration of an example of the system, depicting modularity of the constraining container to modify the interior volume and accommodate the workpiece;
Fig. 14 is a schematic illustration of an example of an aircraft; and
Fig. 15 is a flow diagram of an example of an aircraft manufacturing and service method..

### DETAILED DESCRIPTION

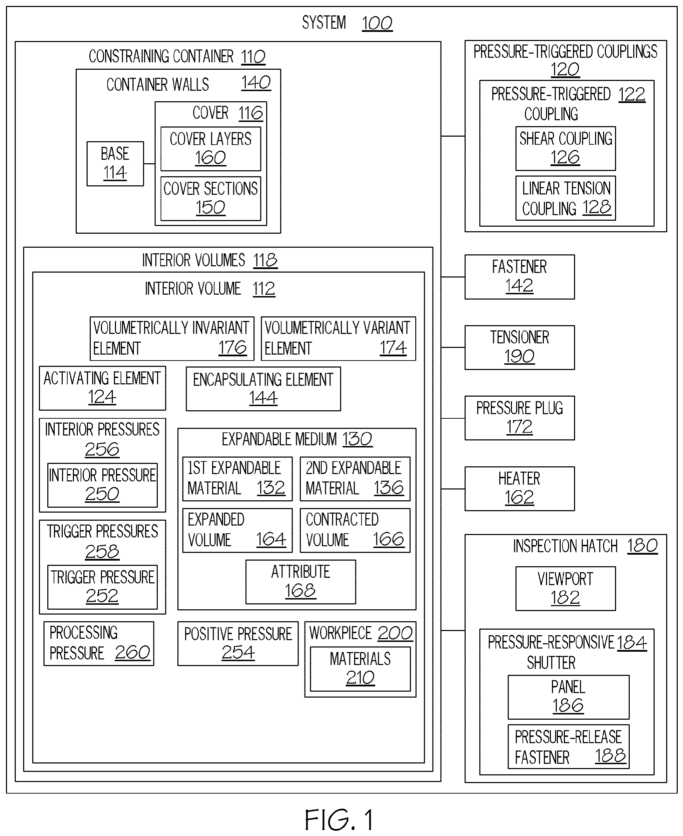

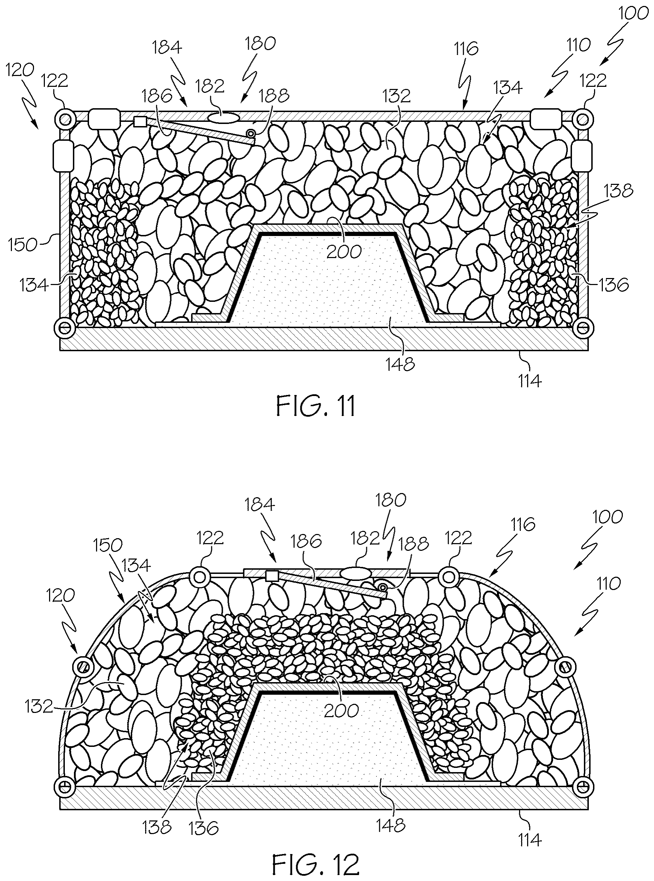

Referring now to Figs. 1 and 3-13, by way of examples, the present disclosure is directed to a system 100 for processing a workpiece 200. The following are examples of the system 100, according to the present disclosure. Examples of the system 100 include a number of elements, features, and components. Not all of the elements, features, and/or components described or illustrated in one example are required in that example. Some or all of the elements, features, and/or components described or illustrated in one example can be combined with other examples in various ways without the need to include other elements, features, and/or components described in those other examples, even though such combination or combinations are not explicitly described or illustrated by example herein.

Examples of the system 100 utilize portable and modular constraining containers, expandable materials, and associated components that enable out-of-autoclave fabrication for high-quality processed parts. Examples of the system 100 advantageously facilitate the application of omnidirectional and at least approximately uniform pressure on surfaces of components to be processed. Examples of the system 100 advantageously enable the use of expandable materials for structural bonding, debulking, curing, and consolidating with or without adhesives. Examples of the system 100 advantageously enable material processing in locations where such processing would otherwise be unavailable.

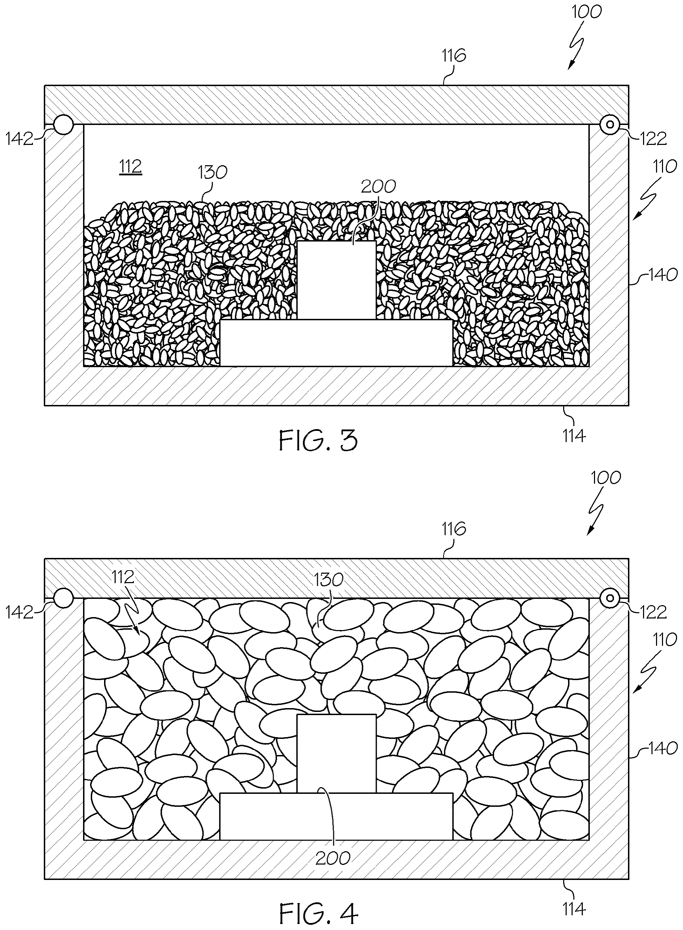

Figs. 3-13 illustrate various examples of the system 100 depicted in use to process at least a portion of the workpiece 200. Generally, a portion of the workpiece 200 refers to any portion or an entirely of the workpiece 200 to be processed using the system 100.

As illustrated in Fig. 1, in one or more examples, the workpiece 200 includes one or more materials 210, such as a first material, a second material, etc. In some examples, the materials 210 are the same. In some examples, the materials 210 are different. In one or more examples, the workpiece 200 can also include any other number of materials 210, including base materials, material layers, components, accessories, and the like, which are to be bonded together during a material processing operation. In one or more examples, one or more of the materials 210 is a composite material (e.g., composite component, part, object, etc.) that includes one or more composite layers (also called plies). In one or more examples, one or more of the materials 210 is a metallic material (e.g., metallic component, part, object, etc.). In one or more examples, one or more of the materials 210 is a ceramic material (e.g., ceramic component, part, object, etc.). In one or more examples, one or more of the materials 210 is a polymeric material (e.g., polymeric component, part, object, etc.).

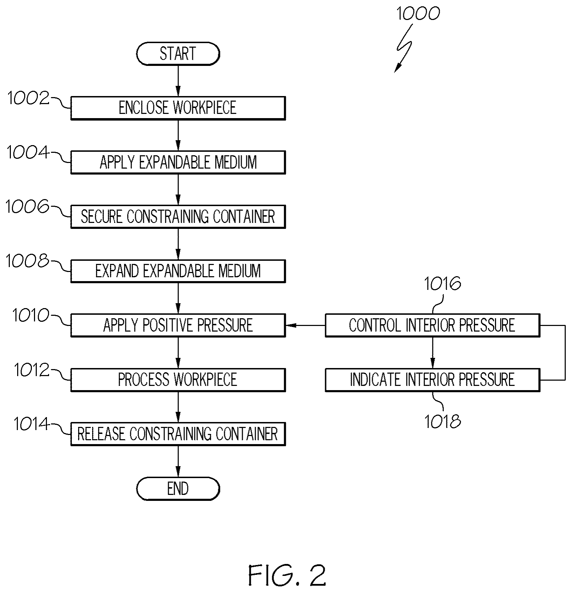

Figs. 3-13 illustrate various examples of the workpiece 200 and examples of the materials 210 that are to be processed, cured, consolidated, or bonded together using the system 100 and/or according to method 1000 (Fig. 2). The workpiece 200 can include any suitable number of the materials 210 (e.g., material types, material layers, material portions, material components or parts, etc.). In various examples, the workpiece 200 includes one or more composite materials, metallic materials, ceramic materials, polymer materials, thermoplastic materials, thermosetting materials, fiber reinforcement materials, and/or any other suitable materials depending on the desired properties for the bonded structure.

In any of these examples, the materials 210 are processed using the system 100 and/or according to the method 1000. In one or more examples, the materials 210 (e.g., thermosets) are cured. In one or more examples, the materials 210 (e.g., thermoplastics) are consolidated. In one or more examples, the materials 210 are bonded together by co-curing (e.g., with application of heat and/or pressure). In one or more examples, the materials 210 are bonded together by co-bonding (e.g., with application of heat and/or pressure). In one or more examples, the materials 210 are bonded together by secondary bonding (e.g., with application of heat and/or pressure).

The workpiece 200 can have any suitable one of various different cross-sectional geometries. The materials 210 include a number of material layers (e.g., uncured composite materials, cured composite materials, metallic materials, ceramic materials, polymer materials, thermoplastic materials, thermosetting materials, fiber reinforcement materials, etc.) and, optionally, adhesive layers, that are bonding together using expansion of an expandable medium 130 to apply positive pressure 254 to the workpiece 200. In one or more examples, the workpiece 200 includes a number of layers of the materials 210 (e.g., material layers) that are processed (e.g., cured, consolidated, or bonded together) using expansion of the expandable medium 130 to apply the positive pressure 254 to the workpiece 200. In one or more examples, the expandable medium 130 is situated or positioned relative to the workpiece 200 such that the positive pressure 254 (e.g., an omni-directional force) is applied to at least one side or surface of the workpiece 200.

As illustrated in Fig. 1 and 3-13, in one or more examples, the system 100 includes a constraining container 110. The constraining container 110 includes an interior volume 112. The constraining container 110 is configured to enclose at least a portion of the workpiece 200 to be processed. The constraining container 110 serves as a pressurized tooling chamber in which the interior volume 112 can be pressurized to aid in material forming, bonding, curing, consolidating, or other processing activities.

In one or more examples, the constraining container 110 serves as a portable and modular space constraining container or tooling that encloses at least a portion of the workpiece 200, which is being processed (e.g., fabricated, repaired, bonded, etc.). Portability and modularity of the constraining container 110 advantageously enables workpiece fabrication and/or material processing in otherwise unavailable locations. In one or more examples, the constraining container 110 is configured (e.g., sized and shaped) to contain and/or enclose an entirety of the workpiece 200 being processed. In one or more examples, the constraining container 110 is configured to contain and/or enclose a portion (e.g., less than the entirety) of the workpiece 200 being processed.

As illustrated in Figs. 1 and 3-13, in one or more examples, in one or more examples, the constraining container 110 includes a base 114 and a cover 116. Generally, the cover 116 is coupled to the base 114 to form or define the interior volume 112 of the container 110. In one or more examples, the cover 116 is movable relative to the base 114 to place the container 110 in one of an open configuration or a closed configuration.

As illustrated in Figs. 3-13, in one or more examples, the workpiece 200 is supported on or by the base 114. In one or more examples, the cover 116 is located relative to base 114 and/or the workpiece 200 such that at least the portion of the workpiece 200 and the expandable medium 130 are positioned within or are otherwise constrained by the cover 116 or between the cover 116 and the base 114. In one or more examples, the cover 116 enables the expandable medium 130 and the workpiece 200 to the loaded within the interior volume 112 of the constraining container 110. In one or more examples, the cover 116 has or forms a cross-sectional profile that corresponds to a cross-sectional shape of the workpiece 200. Providing the cover 116 with a cross-sectional profile that corresponds to (e.g., at least approximately matches or is complementary to) the cross-sectional shape of the workpiece 200 facilitates a smaller interior volume 112 of the constraining container 110 and, thus, a reduction in the amount of the expandable medium 130 needed.

In one or more examples, the workpiece 200 is disposed in the constraining container 110 (e.g., on the base 114) during the processing. In some examples, in order for suitable compressive forces (e.g., positive pressure 254) to be applied to the workpiece 200 while it is within the constraining container 110, at least the portion of the workpiece 200 being processed may need to be well-supported. In one or more examples, the base 114 provides a substantially non-compressible surface to support one side of the workpiece 200. In other examples, depending on the type of workpiece 200 being processed, the system 100 includes a forming tool 148 (Figs. 3-12). In one or more examples, the forming tool 148 is configured to be situated in the interior volume 112. In one or more examples, the forming tool 148 is integrated with the base 114. The forming tool 148 is configured to support at least the portion of the workpiece 200. In one or more examples, the forming tool 148 provides the cross-sectional shape for the workpiece 200 (e.g., a mandrel).

As illustrated in Figs. 1 and 3-13, in one or more examples, the system 100 includes a pressure-triggered coupling 122 (e.g., one or more pressure-triggered couplings 120). The pressure-triggered coupling 122 is configured to secure the constraining container 110 in the closed configuration. The pressure-triggered coupling 122 is also configured to selectively and automatically release the constraining container 110 upon an interior pressure 250 of the interior volume 112 of the constraining container 110 reaching a trigger pressure 252.

As illustrated in Figs. 3 and 4, in one or more examples, the cover 116 is coupled to the base 114 by the pressure-triggered coupling 122 such that the cover 116 releases from the base 114 upon the interior pressure 250 reaching the trigger pressure 252, such as upon expansion of the expandable medium 130 shown in Fig. 4.

As illustrated in Figs. 3 and 4, in one or more examples, the system 100 includes a fastener 142 (e.g., one or more fasteners). In these examples, the cover 116 is also coupled to the base 114 (e.g., at a different location from the pressure-triggered coupling 122) by the fastener 142. The fastener 142 can be any suitable mechanical fastener, such as, but not limited to, bolts and nuts, pins, rivets, clips, clamps, hinges, latches, and the like. In one or more examples, the fastener 142 enables hinged or pivotal movement between the cover 116 and the base 114 for opening and closing the container 110.

Referring again to Figs. 1 and 3-13, pressure-triggered coupling 122 is an example of any one of a plurality of the pressure-triggered couplings 120. In one or more examples, the pressure-triggered coupling 122 is an overload coupling or an overload-triggered coupling that is configured to fail (e.g., intentionally break) in response to a predetermined force generated by or corresponding to the interior pressure 250 within the constraining container 110. In one or more examples, the trigger pressure 252 is an overload pressure that is beyond the tolerance of the system 100 and/or the material being processed to protect the system 100 and/or workpiece 200 from damage caused by excessive force or pressure. In other examples, the trigger pressure 252 is a predetermined processing pressure, such as a first (e.g., minimum) pressure level, for example, to ensure good processing quality.

As illustrated in Fig. 1 and 3-13, in one or more examples, the system 100 includes the expandable medium 130. The expandable medium 130 is configured to be disposed within the interior volume 112 between at least a portion of the constraining container 110 and at least a portion of the workpiece 200. The expandable medium 130 is configured to expand such that the expandable medium 130 applies the positive pressure 254 to the constraining container 110 and the workpiece 200.

In one or more examples, prior to the processing, the expandable medium 130 is in an unexpanded state (e.g., Fig. 3). In the unexpanded (e.g., pre-expanded) state, the expandable medium 130 may be referred to as unexpanded or as an unexpanded element. During the fabrication process, the expandable medium 130 is caused to expand to an expanded state (e.g., Figs. 4-13). In the expanded state, the expandable medium 130 may be referred to as expanded or as an expanded element. In one or more examples, in the expanded state, the expandable medium 130 applies pressure to interior surfaces of the constraining container 110 and to surface of the workpiece 200. In one or more examples, the expanded expandable medium 130 applies the positive pressure 254 (resulting from the expansion of the expandable medium 130) to the workpiece 200 during some or all of the fabrication process to facilitate compression. In one or more examples, after the workpiece 200 has been processed, the expandable medium 130 can be removed from the constraining container 110 prior to, simultaneously with, or after the now fabricated condition of the workpiece 200 is removed from the constraining container 110.

In one or more examples, the expandable medium 130 is configured to expand to an expanded volume 164 in response to a first predetermined change produced in an attribute 168 of the expandable medium 130. Upon expansion, the expandable medium 130 applies or exerts positive pressure 254 upon the workpiece 200 and the constraining container 110. Generally, the expanded volume 164 is known or is capable of being calculated based on the material composition of the expandable medium 130, the attribute 168, and/or an activation temperature of the expandable medium 130. In one or more examples, the expanded volume 164 of the expandable medium 130 in the expanded state is greater than the interior volume 112 of the constraining container 110. For the purpose of the present disclosure, the interior volume 112 refers to the actual available, fillable interior volume of the interior cavity of the constraining container 110. In various examples, the expanded volume 164 is substantially the same as or marginally greater than the interior volume 112 defined by the constraining container 110, the workpiece 200, and those other components situated within the constraining container 110 such that, upon expansion of the expandable medium 130, the expandable medium 130 applies the positive pressure 254 to the workpiece 200, unless the interior volume 112 can be changed (e.g., by adjusting the pressure plug 172, controlling the volumetrically variant element 174, and the like). In one or more examples, the amount (e.g., volume) of the expandable medium 130 in an unexpanded state to be loaded within the interior volume 112 of the constraining container 110 is established by testing or models to predict the pressure during and after expansion within the constrained volume.

In one or more examples, the expandable medium 130 is configured to contract to a contracted volume 166 in response to a second predetermined change produced in the attribute 168 of the expandable medium 130. Upon contraction, the expandable medium 130 reduces or removes the positive pressure 254 applied the workpiece 200 and the constraining container 110. Generally, the contracted volume 166 is known or is capable of being calculated based on the material composition of the expandable medium 130, the attribute 168, and/or an activation temperature of the expandable medium 130. In various examples, the contracted volume 166 of the expandable medium 130 is less than the expanded volume 164. In one or more examples, the contracted volume 166 is less than the expanded volume 164 but greater than the unexpanded (e.g., pre-expanded) volume of the expandable medium 130.

In one or more examples, the expandable medium 130 is exothermic during expansion and/or contraction. In one or more examples, the expandable medium 130 is endothermic during expansion and/or contraction. In these examples, activation and, thus, expansion or contraction of the expandable medium 130 can be used to control the temperature during fabrication, for example, the temperature of the workpiece 200, the temperature of the expandable medium 130, and/or the temperature within the constraining container 110. In one or more examples, the expandable medium 130 is neither exothermic nor endothermic (e.g., no heat is released or absorbed) during expansion and/or contraction.

The expandable medium 130 can include any one or more of various suitable types of materials or material compositions, which is configured to expand and, optionally, contract, upon activation or in response to a change in at least one instance of the attribute 168. As illustrated, in one or more examples, the expandable medium 130 includes expandable pellets. In one or more examples, the expandable pellets are thermally activated at an activation temperature. In these examples, the expandable pellets are configured to expand when the temperature of the expandable pellets is raised up to the activation temperature. In one or more examples, the expandable pellets are chemically activated, for example, by application of the activating element 124. In one or more examples, any suitable number of the expandable pellets can be placed within the interior volume 112 of the constraining container 110, provided that when expanded they are able to apply the positive pressure 254 to the workpiece 200 sufficient for the desired processing operation. The number of the expandable pellets is dependent upon the size of the interior volume 112. That is, where the constraining container 110 fits more closely around the contours of the workpiece 200, the fewer number of the expandable pellets may be needed. In various examples, each one of the expandable pellets can have any suitable dimensions. In one or more examples, the length of the expandable pellets is less than approximately one centimeter. The expandable pellets can be substantially uniform in size or can include pellets of different sizes. In one or more examples, the expandable medium 130, such as the expandable pellets, includes or takes the form of foamable pellets. In one or more examples, the foamable pellets are configured to foam when heated to at least a predetermined foaming temperature (e.g., activation temperature). In one or more examples, the foamable pellets include a foamable material, such as a thermoplastic material treated with a blowing agent; a gas-filled balloon; hollow microspheres, a metal; any other suitable component configured to expand when heated, or any combination thereof.

As illustrated in Fig. 1 and 5-13, in one or more examples, the constraining container 110 includes the base 114 and the cover 116. The cover 116 is coupled to the base 114 by some combination of the pressure-triggered coupling 122 and the fastener 142. In one or more examples, the cover 116 includes a plurality of cover sections 150. At least two of the cover sections 150 are coupled together by one of the pressure-triggered couplings 120 (e.g., pressure-triggered coupling 122) such that the at least two of the cover sections 150 release from each other upon the interior pressure 250 reaching the trigger pressure 252.

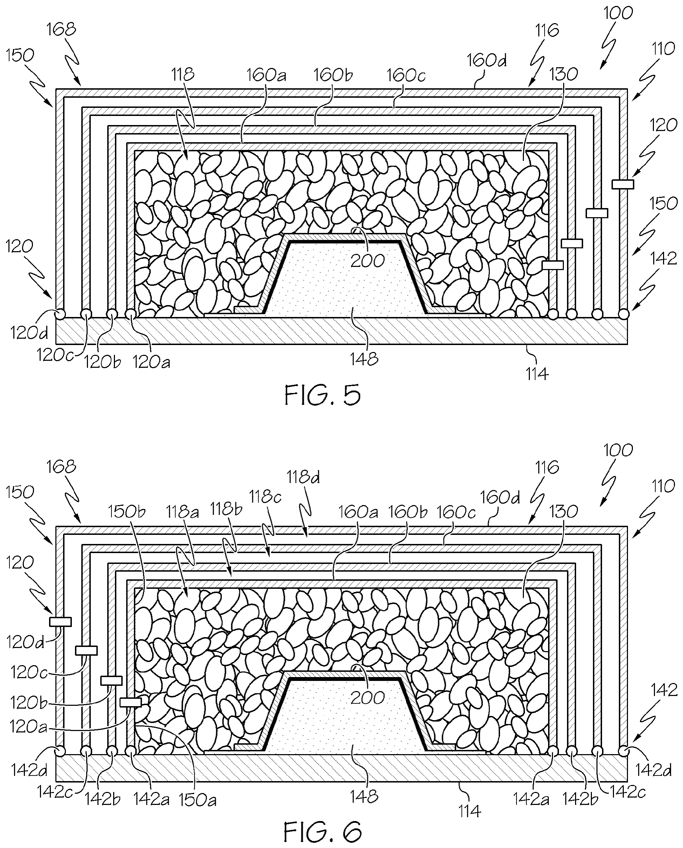

As illustrated in Fig. 5, in one or more examples, any one or more of the cover sections 150 is coupled to a directly adjacent one of the cover sections 150 by one of the pressure-triggered couplings 120. As illustrated in Fig. 6, in one or more examples, any one or more of the cover sections 150 can also be coupled directly to the base 114 of the container 110, such as by the fastener 142.

As illustrated in Figs. 1, 3 and 4, in one or more examples, the constraining container 110 includes or is formed by plurality of container walls 140. In these examples, some of the container walls 140 form the base 114 and some of the container walls 140 form the cover 116. As an example, some of the container walls 140 form the cover sections 150 of the cover 116 and other of the container walls 140 form the base 114. In these examples, at least two of the container walls 140 are coupled together by the pressure-triggered coupling 122 such that the at least two of the container walls 140 release from each other upon the interior pressure 250 reaching the trigger pressure 252. Additionally, some of the container walls 140 can be coupled together by the fastener 142.

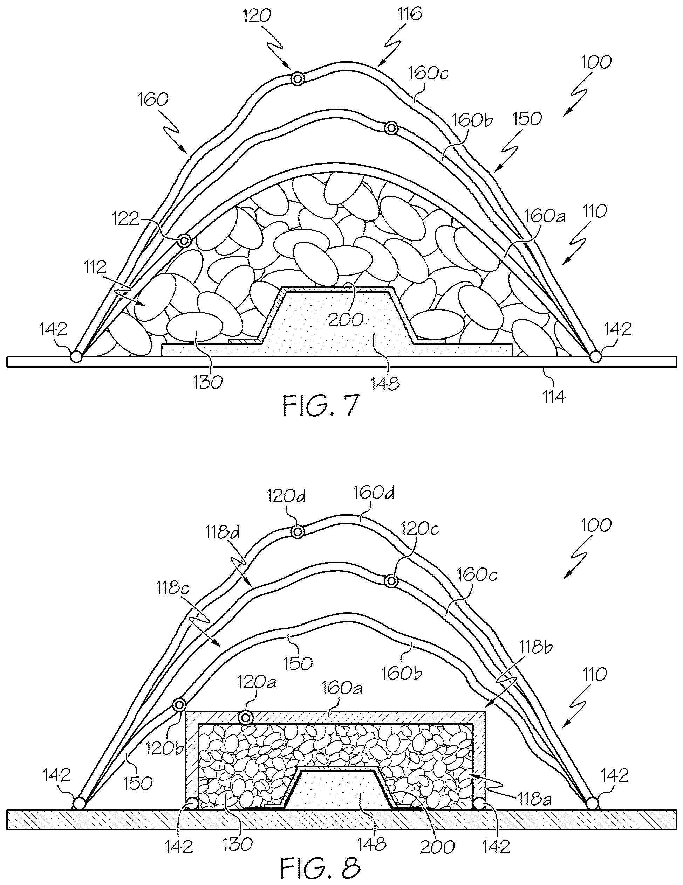

As illustrated in Fig. 1 and 5-8, in one or more examples, the cover 116 includes a plurality of cover layers 160. In the examples illustrated in Figs.5, 6 and 8, the cover 116 includes four cover layers 160 (e.g., first cover layer 160a, second cover layer 160b, third cover layer 160c, and fourth cover layer 160d). In these examples, the first cover layer 160a is an innermost layer of the cover 116 and the fourth cover layer 160d is an outmost layer of the cover 116. In the example illustrated in Fig. 7, the cover 116 includes three cover layers 160. In these examples, the first cover layer 160a is the innermost layer of the cover 116 and the third cover layer 160c is the outermost layer of the cover 116. In one or more examples, each one of the cover layers 160 is coupled to the base 114. In one or more examples, one or more of the cover layers 160 is coupled to the base 114 by one of the pressure-triggered couplings 120 (e.g., first pressure-triggered coupling 120a, second pressure-triggered coupling 120b, third pressure-triggered coupling 120c, fourth pressure-triggered coupling 120d, etc. as shown in Figs. 5 and 6). In one or more examples, one or more of the cover layers 160 can also be coupled to the base 114 by one of the fasteners 142 (e.g., first fastener 142a, second fastener 142b, third fastener 142c, fourth fastener 142d, etc. shown in Fig. 6).

As illustrated in Fig. 5, in one or more examples, each one of the pressure-triggered couplings 120 (e.g., first pressure-triggered coupling 120a, second pressure-triggered coupling 120b, third pressure-triggered coupling 120c, fourth pressure-triggered coupling 120d, etc.) is situated between an associated one of the cover layers 160 (e.g., first cover layer 160a, second cover layer 160b, third cover layer 160c, and fourth cover layer 160d, etc.) and the base 114.

As illustrated in Figs. 5 and 6, in one or more examples, each one of the pressure-triggered couplings 120 (e.g., first pressure-triggered coupling 120a, second pressure-triggered coupling 120b, third pressure-triggered coupling 120c, fourth pressure-triggered coupling 120d, etc.) is situated between adjacent cover sections 150 (e.g., first cover section 150a and second cover section 150b) of each associated one of the cover layers 160 (e.g., first cover layer 160a, second cover layer 160b, third cover layer 160c, and fourth cover layer 160d, etc.). In these examples, each one of the cover layers 160 is coupled to the base 114 by an associated one of the fasteners 142 (e.g., first fastener 142a, second fastener 142b, third fastener 142c, fourth fastener 142d, etc.), such as a hinge or pin. In this way, once the pressure-triggered couplings 120 release (e.g., fail or break), the disconnected sections of the container 110 (e.g., cover sections 150) can move in some way, allowing the expandable medium 130 to access and expand into the free space (e.g., associated ones of the interior volumes 118) of the next outward one of the cover layers 160 and activate the next set of pressure-triggered couplings 120 associated with that cover layer 160.

Each one of the cover layers 160 and the base 114 form one of a plurality of interior volumes 118 of the constraining container 110. As an example, the base 114 and the first one of the cover layers 160 (e.g., first cover layer 160a) form a first one of the interior volumes 118 (e.g., first interior volume 118a), the base 114 and the second one of the cover layers 160 (e.g., second cover layer 160b) form a second one of the interior volumes 118 (e.g., second interior volume 118b), the base 114 and the third one of the cover layers 160 (e.g., third cover layer 160c) form a third one of the interior volumes 118 (e.g., third interior volume 118c), the base 114 and the fourth one of the cover layers 160 (e.g., fourth cover layer 160d) form a fourth one of the interior volumes 118 (e.g., fourth interior volume 118d), etc., as illustrated by example in Fig. 6). In the illustrative examples, the second one of the interior volumes 118 is larger than the first one of the interior volumes 118, the third one of the interior volumes 118 is larger than the second one of the interior volumes 118, etc.

As illustrated in Figs. 1 and 5-8, in one or more examples, each one of the cover layers 160 includes or is formed by at least two of the cover sections 150 (e.g., at least two of the container walls 140). In one or more examples, the cover sections 150 of each one of the cover layers 160 are coupled together by one of the pressure-triggered couplings 120 such that the cover sections 150 of each one of the cover layers 160 sequentially release from each other upon each one of a plurality of interior pressures 256 reaching one of a plurality of trigger pressures 258.

In one or more examples, as shown in Fig. 6, the cover sections 150 of the first one of the cover layers 160 (e.g., first cover layer 160a) are coupled together by a first one of the pressure-triggered couplings 120 (e.g., first pressure-triggered coupling 120a) that is configured to release in response to a first one of the trigger pressures 258, thereby opening the second interior volume 118b. The cover sections 150 of the second one of the cover layers 160 (e.g., second cover layer 160b) are coupled together by a second one of the pressure-triggered couplings 120 (e.g., second pressure-triggered coupling 120b) that is configured to release in response to a second one of the trigger pressures 258, thereby opening the third interior volume 118c. The cover sections 150 of the third one of the cover layers 160 (e.g., third cover layer 160c) are coupled together by a third one of the pressure-triggered couplings 120 (e.g., third pressure-triggered coupling 120c) that is configured to release in response to a third one of the trigger pressures 258, thereby opening the fourth interior volume 118d. The cover sections 150 of the fourth one of the cover layers 160 (e.g., fourth cover layer 160d) are coupled together by a fourth one of the pressure-triggered couplings 120 (e.g., fourth pressure-triggered coupling 120d) that is configured to release in response to a fourth one of the trigger pressures 258, thereby opening the constraining container 110 and releasing the interior pressure 250 within the constraining container 110.

In one or more examples, at least one (e.g., each one) of the trigger pressures 258 are different from at least another one. As an example, the second one of the trigger pressures 258 is greater than the first one of the trigger pressures 258, the third one of the trigger pressures 258 is greater than the second one of the trigger pressures 258, etc. In such examples, the system 100 is configured to sequentially or successively release pressure and provide successively larger interior volumes 118 for the constraining container 110 throughout the processing operation. These examples advantageously enable the system 100 to control processing pressures through entirely mechanical means, without relying on complex and expensive sensors and/or programmable (e.g., feedback) controllers.

As illustrated in Fig. 6, in one or more examples, a first one of the pressure-triggered couplings 120 (e.g., first pressure-triggered coupling 120a) couples two of the cover sections 150 (e.g., first cover section 150a and second cover section 150b) of a first one of the cover layers 160 (e.g., first cover layer 160a) and is configured to release the two of the cover sections 150 upon a first one of the interior pressures 256 within a first one of the interior volumes 118 (e.g., first interior volume 118a formed by the base 114 and the first cover layer 160a) reaching a first one of the trigger pressures 258. Similarly, a second one of the pressure-triggered couplings 120 (e.g., second pressure-triggered coupling 120b) couples two of the cover sections 150 (e.g., first cover section 150a and second cover section 150b) of a second one of the cover layers 160 (e.g., second cover layer 160b) and is configured to release the two of the cover sections 150 upon a second one of the interior pressures 256 (e.g., second interior volume 118b formed by the base 114 and the second cover layer 160b) reaching a second one of the trigger pressures 258. This process is repeatable for each one of the cover layers 160.

In these examples, the first one of the trigger pressures 258 and the second one of the trigger pressures 258 are different. In one or more examples, the second one of the trigger pressures 258 is greater than the first one of the trigger pressures 258 such that the pressure applied to the workpiece 200 is controllably increased during processing. In one or more examples, the second one of the trigger pressures 258 is less than the first one of the trigger pressures 258 such that the pressure applied to the workpiece 200 is controllably decreased during processing.

It can be appreciated that the system 100 can include any feasible number of cover layers 160. Further, each one of the cover layers 160 can include any feasible number of cover sections 150 that are coupled to each other and/or to the base 114. Moreover, each one of the cover layers 160 can include one or more of the pressure-triggered couplings 120, which are configured to release (e.g., fail or break) in response to an associated one of the trigger pressures 258. As such, the system 100 enables control of the processing pressure (e.g., positive pressure 254) applied to the workpiece 200 throughout the processing operation without requiring complex controllers or other processing equipment.

As illustrated in Figs. 3-13, in one or more examples, at least a portion of the constraining container 110 (e.g., the cover 116 and/or the base 114) is rigid. In one or more examples, at least a portion of the constraining container 110 (e.g., the cover 116 and/or the base 114) is flexible. In one or more examples, at least a portion of the constraining container 110 (e.g., the cover 116 and/or the base 114) is flexible and non-expandable. In one or more examples, at least a portion of the constraining container 110 (e.g., the cover 116 and/or the base 114) is flexible and expandable. In one or more examples, at least a portion of the constraining container 110 is substantially resistant to expansion, at least when pressure is applied on inner surfaces of the constraining container 110 by the expandable medium 130. In this way, pressure applied to an outer surface of the workpiece 200 acts cooperatively with the constraining container 110 to generate compressive force (e.g., positive pressure 254) upon the workpiece 200 for processing.

As illustrated in Fig. 3-6, 8, 9, 11 and 13, in one or more examples, at least a portion of the cover 116, such as at least one of the cover sections 150, is rigid. As used herein, "rigid" refers to the state of being substantially stiff, hard, non-flexible, non-expandable, or otherwise resistant to bending or deformation. In these examples, at least a portion of the base 114 and/or the cover 116 (e.g., at least some of the container walls 140) are made out of any suitable material, including, but not limited to, metallic materials, composite materials, cement materials, ceramic materials, polymeric materials, and the like. In these examples, the constraining container 110 constrains the expandable medium 130 and reacts to the positive pressure 254 generated by the expandable medium 130 upon expanding. In these examples, the constraining container 110 is capable of withstanding the pressure generated within the interior volume 112 upon expansion of the expandable medium 130.

As illustrated in Fig. 7, 8, 10A and 12, in one or more examples, at least a portion of the cover 116, such as at least one of the cover sections 150, is flexible. As used herein, "flexible" refers to being capable of bending or changing shape without breaking or permanent deformation. In these examples, the flexible portions of the constraining container 110 can be either expandable or non-expandable. Providing at least a portion of at least one of the base 114 and/or the cover 116 (e.g., at least some of the container walls 140) as flexible enables the constraining container 110 to form over (e.g., more closely match) the profile shape of at least a portion of the workpiece 200 and/or the expandable medium 130 before expansion of the expandable medium 130 and/or facilitates conforming to the shape of at least a portion of the workpiece 200, resulting in a smaller interior volume 112 of the constraining container 110 and, thus, a reduction in the amount of the expandable medium 130 needed and increasing the portability of the system 100. Providing at least a portion of the constraining container 110 as flexible and non-expandable enables shape conformation and more strict control over interior processing pressures. Providing at least a portion of the constraining container 110 as flexible and expandable enables shape conformation and some tolerance over interior processing pressures. In one or more examples, at least a portion of constraining container 110 can be made out of any suitable flexible and non-expandable material, including, but not limited to, metallic mesh (e.g., chainmail), ceramic mesh, polymeric mesh, and the like. In one or more examples, at least a portion of constraining container 110 can be made out of any suitable flexible and expandable material, including, but not limited to, natural or synthetic rubber, silicone, and the like.

As illustrated in Figs. 7 and 8, in one or more examples, any one of the cover layers 160 or any one of the cover sections 150 that is flexible can have any suitable shape before expansion of the expandable medium 130. As an example, the cover layer 160 or cover section 150 can conform to the shape of the workpiece 200 and/or the unexpanded expandable medium 130 (i.e., in the unexpanded state) in the interior volume 112. It can be appreciated that the shapes shown for the examples of the flexible cover layers 160 in Figs. 7 and 8 are provided simply for illustration purposes.

As illustrated in Fig. 1, in one or more examples, the pressure-triggered coupling 122 includes a shear coupling 126. In these examples, the shear coupling 126 includes any suitable mechanical device that is used to connect portions of the constraining container 110 (e.g., cover 116 and base 114, cover sections 150, or container walls 140) and that transmits forces between connected elements while protecting against excessive forces by allowing a limited about of relative motion or failure under certain conditions. In these examples, the shear coupling 126 includes a shear element (e.g., a pin or a disk) designed to fail or "shear" when the interior pressure 250 exceeds a predetermined limit (e.g., trigger pressure 252). In one or more examples, the shear coupling 126 acts as a safety feature to prevent damage to the system 100 and/or the workpiece 200 by breaking the connection during overloads. In one or more examples, the shear coupling 126 acts as a pressure control feature to release pressure by breaking the connection at a predetermined point during processing. In one or more examples, the shear coupling 126 includes or takes the form of a shear pin.

As illustrated in Fig. 1, in one or more examples, the pressure-triggered coupling 122 includes a linear tension coupling 128. In these examples, the linear tension coupling 128 includes any suitable mechanical device that is used to connect portion of the /constraining container 110 (e.g., 116 and base 114, cover sections 150, or container walls 140) and that transmits forces between connected elements while protecting against excessive forces by allowing failure under certain conditions. In these examples, the linear tension coupling 128 includes an elongated coupling element designed to fail when the interior pressure 250 exceeds a predetermined limit (e.g., trigger pressure 252). In one or more examples, the linear tension coupling 128 acts as a safety feature to prevent damage to the system 100 and/or the workpiece 200 by breaking the connection during overloads. In one or more examples, the linear tension coupling 128 acts as a pressure control feature to release pressure by breaking the connection at a predetermined point during processing. In one or more examples, the linear tension coupling 128 includes or takes the form of a line of weakening in the constraining container 110, a zipper-like coupling (e.g., having interlocking teeth that fit together and transmit force), a snap-like coupling (e.g., spring-loaded clips or latches that snap into place when connected or grooved or ridged surfaces that interlock for secure attachment), a hook-and-loop fastener-like couple, and the like.

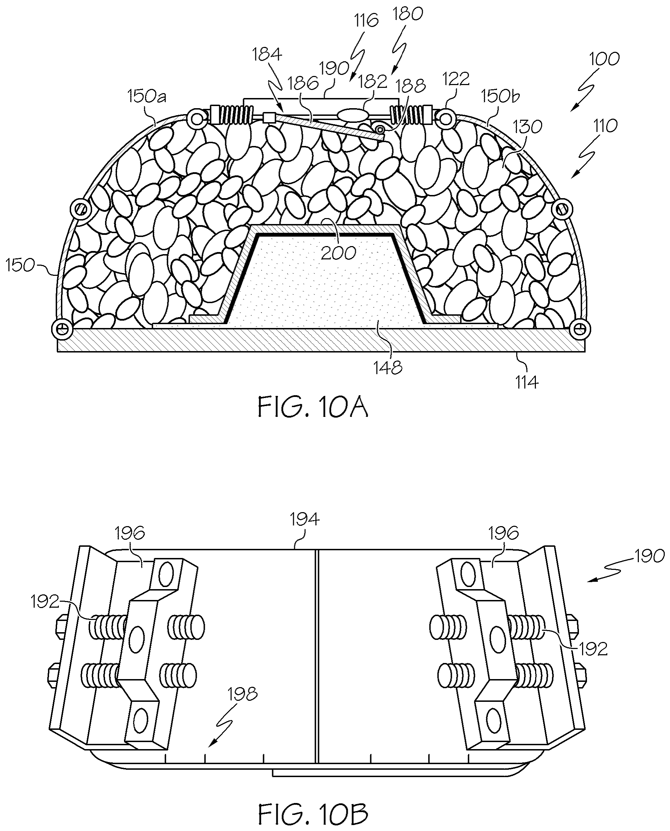

As illustrated in Fig. 1, 10A and 10B, in one or more examples, the system 100 includes a tensioner 190. The tensioner 190 is configured to selectively apply a tension between two of sections of the constraining container 110, such as between two of the cover sections 150, between two of the container walls 140, or between the cover 116 and the base 114, to provide some control the interior pressure 250 or otherwise provide some tolerance (e.g., expansion) before failure of the pressure-triggered coupling 122.

As illustrated in Fig. 10A, in one or more examples, the tensioner 190 is integrated into the cover 116 of the constraining container 110. In these examples, the tensioner 190 is coupled at a first end to one of the cover sections 150 (e.g., first cover section 150a) and at an opposing second end to another one of the cover sections 150 (e.g., second cover section 150b). The tensioner 190 can be any one of various types of mechanical devices configured to apply, maintain, and/or adjust the tension between the cover sections 150 of the cover 116 or between the cover 116 and the base 114. In one or more examples, the tensioner 190 is adjustable.

As illustrated in Fig. 10B, in various examples, the tensioner 190 includes or takes the form of a spring-loaded tensioner. However, other tensioning mechanisms can also be used. In one or more examples, the tensioner 190 includes at least one spring 192. In one or more examples, the tensioner 190 includes a guide plate 194 and at least one of the springs 192 is coupled to guide plate 194 by a bracket 196. In these examples, each of the springs 192 is also coupled to one of the cover sections 150. In one or more examples, loading on the springs 192 is adjusted or modified using bolt fastener with a threaded shank that are coupled to the bracket 196 such that rotation of the bolt opens or closes the bracket 196 and, thus, decreases or increases the spring load tension. In one or more examples, tensioner 190 is configured to allow for expansion and contraction due to relative movement of the cover 116 during expansion of the expandable material 130. As an example, the guide plate 194 has a material overlap that allows for contraction and expansion.

As illustrated in Fig. 10B, in one or more examples, the tensioner 190 is further configured to indicate the interior pressure 250. In these examples, the force (e.g., tension) applied to the tensioner 190 by the cover sections 150 in response to an increase in the interior pressure 250 due to expansion of the expandable medium 130 is directly proportional to the displacement (e.g., stretch or compression) of the spring 192. As such, the displacement of the spring 192 is used to measure the forces acting on the cover sections 150 during expansion of the expandable medium 130. In one or more examples, the tensioner 190 includes a scale 198 disposed on the guide plate 194 that provides a visual indication of the interior pressure 250.

As illustrated in Fig. 10A, in one or more examples, the tensioner 190 is coupled to at least one of the cover sections 150 by at least one of the pressure-triggered couplings 120. In these examples, the pressure-triggered couplings 120 are configured to release (e.g., break or fail) upon the interior pressure 250 reaching the trigger pressure 252.

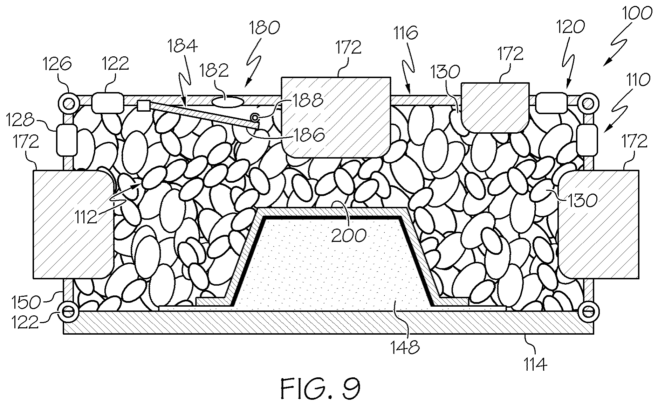

As illustrated in Fig. 1 and 9, in one or more examples, the system 100 includes a pressure plug 172. In one or more examples, the system 100 includes any number of pressure plugs 172 (e.g., four pressure plugs 172 are illustrated in Fig. 9). The pressure plug 172 is coupled to the constraining container 110 such that a portion of the pressure plug 172 is disposed in the interior volume 112. The pressure plug 172 is movable relative to the constraining container 110 to modify the interior volume 112. Selective modification or variation of the interior volume 112 using the pressure plug 172 enables selective or reactive control and modification of the interior pressure 250 within the constraining container 110 (e.g., within interior volume 112 and acting on the workpiece 200.)

In one or more example, at least one pressure plug 172 is coupled to one of the cover sections 150. The pressure plug 172 is movable relative to the cover section 150 into and out from the interior volume 112. As such, insertion of the pressure plug 172 within the interior volume 112 in turn reduces the open volume available to be filled by expansion of the expandable medium 130 and, thereby, can provide an associated increase in the interior pressure 250 and, thus, the positive pressure 254 applied to the workpiece 200. Alternatively, withdrawal of the pressure plug 172 from the interior volume 112 in turn increases the open volume available to be filled by expansion of the expandable medium 130 and, thereby, can provide an associated decrease in the interior pressure 250 and, thus, the positive pressure 254 applied to the workpiece 200. As such, insertion or withdrawal of the pressure plug 172 can be used to adjust the positive pressure 254 applied to the workpiece 200 during processing.

As illustrated in Fig. 9, in one or more examples, an instance of the pressure plugs 172 is coupled to different ones of the cover sections 150 and, thus, can control the portions of the interior volume 112 and the positive pressure 254 as specific or targeted locations. In the illustrated examples, the pressure plugs 172 are situated on sides and on top of the workpiece 200, such that the positive pressure 254 applied to those areas of the workpiece 200 can be increased or decreased, as desired, during processing. As an example, the pressure plug 172 can be positioned proximate (e.g., at or near) a predetermined location or area of the workpiece 200, such as a cavity or contour between different portions of the workpiece 200, such that an intensified pressure is applied to the radius of a contour during fabrication (e.g., curing, consolidating, and/or bonding).

The pressure plug 172 can take any one of various suitable forms. In an example, the pressure plug 172 includes a threaded shaft that is inserted through and mates with a threaded opening in the constraining container 110. In an example, the pressure plug 172 takes the form of a plunger mechanism.

As illustrated in Fig. 1, 9, 10A, 11 and 12, in one or more examples, the system 100 includes an inspection hatch 180. The inspection hatch 180 is configured to provide a visual indication that the interior pressure 250 has reached a desired or predetermined processing pressure 260 that is less than the trigger pressure 252. In one or more examples, the inspection hatch 180 includes a viewport 182 and a pressure-responsive shutter 184. The viewport 182 is formed in the constraining container 110. In one or more examples, the viewport 182 is formed in the cover 116, such as one of the cover sections 150 (e.g., Figs. 9, 11 and 12). In one or more examples, the viewport 182 is formed in the guide plate 194 of the tensioner 190 (Fig. 10A). The pressure-responsive shutter 184 is configured to cover the viewport 182 upon the interior pressure 250 of the interior volume 112 of the constraining container 110 reaching the processing pressure 260. As such, upon the interior pressure 250 reaching the processing pressure 260, the pressure-responsive shutter 184 covers the viewport 182 and, thereby, provides a visual confirmation that the processing pressure 260 has been achieved.

As illustrated in Fig. 1, 9, 10A,11 and 12, in one or more examples, the pressure-responsive shutter 184 includes a panel 186 and a pressure-release fastener 188. The panel 186 is coupled to the constraining container 110. As an example, the panel 186 is coupled to the cover 116, such as to one of the cover sections 150 or the guide plate 194 of the tensioner 190. The panel 186 is movable (e.g., pivot or hinge) relative to the constraining container 110 to cover the viewport 182. The pressure-release fastener 188 is configured to hold or otherwise bias the panel 186 away from the viewport 182. The pressure-release fastener 188 is also configured to release the panel 186 upon the interior pressure 250 of the interior volume 112 of the constraining container 110 reaching the processing pressure 260. As an example, upon expansion of the expandable medium 130, the expandable medium 130 applies the positive pressure 254 on the panel 186. When the positive pressure 254 reaches the processing pressure 260, the pressure-release fastener 188 releases (e.g., is overcome or fails), thereby allowing the panel 186 to move (e.g., swing or pivot) into a position that covers the viewport 182.

In one or more examples, the moving components of the pressure-responsive shutter 184 are shielded from the expandable medium 130 so that nothing interferes or otherwise blocks component movement relative to the viewport 182. In one or more examples, the inspection hatch 180 includes a track for the panel 186 to slide along relative to the viewport 182 when released by the pressure-release fastener 188.

As illustrated in Figs. 1, 11 and 12, in one or more examples, the expandable medium 130 includes a first expandable material 132 and a second expandable material 136. In one or more examples, the first expandable material 132 is configured to expand to a first expanded volume 134 and second expandable material 136 is configured to expand to a second expanded volume 138. In these examples, the first expanded volume 134 and the second expanded volume 138 are different. In one or more examples, the first expandable material 132 is configured to expand in response to a first condition and second expandable material 136 is configured to expand in response to a second condition. As such, expansion of the first expandable material 132 can be used to apply a first magnitude for the positive pressure 254 or a first instance of the processing pressure 260 and subsequently, expansion of the first expanded volume 134 can be used to apply a second magnitude for the positive pressure 254 or a second instance of the processing pressure 260.

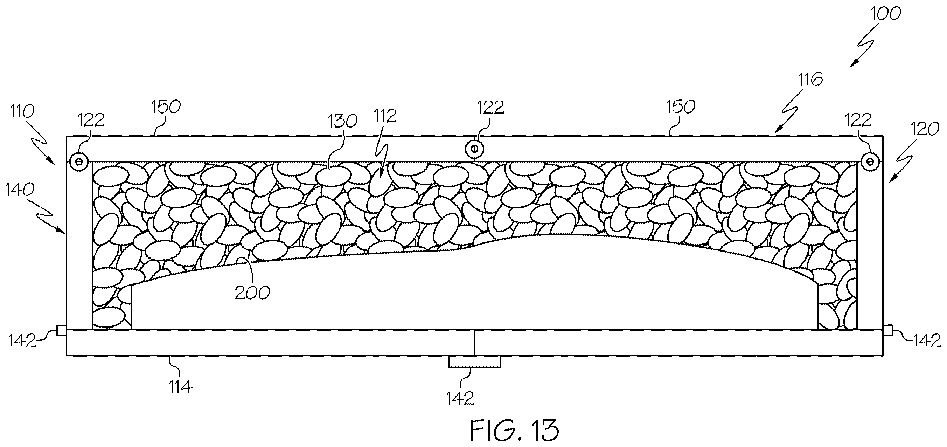

As illustrated in Fig. 13, in one or more examples, a combination of the pressure-triggered coupling 122 and the fastener 142 between different ones of the cover sections 150 and the base 114 (e.g., between different ones of the container walls 140) enables the constraining container 110 to be configured to any one of various sizes and/or shapes to accommodate different types of the workpiece 200.

As illustrated in Fig. 1, in one or more examples, in one or more examples, the system 100 includes an encapsulating element 144. The encapsulating element 144 is configured to enclose at least a portion (e.g., some amount of) the expandable medium 130. The encapsulating element 144 is disposed within the interior volume 112 between the constraining container 110 and at least the portion of the workpiece 200. In one or more examples, at least some portion of the expandable medium 130 is disposed within the encapsulating element 144. In one or more examples, expandable pellets are disposed in or contained by the encapsulating element 144. In one or more examples, the encapsulating element 144 encloses the expandable medium 130 (e.g., the expandable pellets), thereby better facilitating handling of the expandable medium 130 as well as the removal of the expandable medium 130 after processing is complete. The encapsulating element 144 can take any suitable form, such as an enclosed film, sealed material layer, bag, bladder, and the like. In one or more examples, the encapsulating element 144 is non-expandable. In one or more examples, the encapsulating element 144 is expandable. In one or more examples, the encapsulating element 144 is made of a woven nylon or polyester fabric (e.g., firehose material).

As illustrated in Fig. 1, in one or more examples, the system 100 includes an activating element 124. The activating element 124 is configured to initiate at least one of expansion and/or contraction of the expandable medium 130 in the interior volume 112. The type or composition of the element 124 or the mechanism used by the activating element 124 can vary depending on the type or composition of the expandable medium 130. In one or more examples, the activating element 124 is a chemical, water, a heater, and the like.

As illustrated in Fig. 1, in one or more examples, the system 100 includes at least one volumetrically variant element 174. The volumetrically variant element 174 is configured to expand and/or contract within the interior volume 112 to selectively control or modify the interior volume 112 and/or selectively increase and/or decrease the positive pressure 254 (e.g., processing pressure 260) in the constraining container 110. The volumetrically variant element 174 can have any feasible cross-sectional shape, such as circular, elliptical, polygonal, and the like. The volumetrically variant element 174 can be elongated along at least one axis. In one or more examples, the volumetrically variant element 174 is an intermediate layer within the interior volume 112. In one or more examples, the volumetrically variant element 174 includes or takes the form of a bladder or other expandable element. In one or more examples, the volumetrically variant element 174 is filled with a fluid (e.g., gas or liquid) and is configured to equalize the positive pressure 254 applied to the workpiece 200 such that the positive pressure 254 is more uniformly applied. The volumetrically variant element 174 can be selected to be resistant to heat and to be readily removable after the workpiece 200 is fabricated. In one or more examples, the volumetrically variant element 174 is an expandable element or other volume modifying component of the system 100 that is configured to be selectively expanded and/or contracted to selectively decrease or increase the interior volume 112 available to be filled by the expandable medium 130 during expansion of the expandable medium 130. In one or more examples, the volumetrically variant element 174 includes or takes the form of an enclosed bladder or balloon with some type of expandable material (e.g., expandable medium 130). In one or more examples, a chemical (e.g., baking soda powder) can be loaded within the volumetrically variant element 174. After heating the chemical and generating a gas, the volumetrically variant element 174 will expand and decrease the fillable volume of (interior volume 112) of the constraining container 110 and/or apply additional positive pressure 254 in the constrained space. In other examples, the volumetrically variant element 174 is an example of one of the different types of the expandable medium 130 (e.g., the encapsulating element 144). In one or more examples, the volumetrically variant element 174 takes the form of or serves as an intensifier is situated within the interior volume 112 with the expandable medium 130 and the workpiece 200. In one or more examples, the volumetrically variant element 174 is another type or instance of the expandable medium 130 or a different type of expandable material. In one or more examples, the volumetrically variant element 174 is selectively expandable to increase or intensify the pressure applied to the workpiece 200 at one or more locations. As an example, the volumetrically variant element 174 can be positioned proximate (e.g., at or near) a predetermined location or area of the workpiece 200, such as a cavity or contour between different portions of the workpiece 200, such that an intensified pressure is applied to the radius of a contour during fabrication (e.g., curing, consolidating, and/or bonding).

As illustrated in Fig. 1, in one or more examples, the system 100 includes at least one volumetrically invariant element 176. The volumetrically invariant element 176 is configured to maintain a constant size and volume to fill a portion of the interior volume 112. The volumetrically invariant element 176 can have any feasible cross-sectional shape, such as circular, elliptical, polygonal, and the like. The volumetrically invariant element 176 can be elongated along at least one axis.

In one or more examples, the system 100 includes one or more other processing components, such as a caul plate, bagging, and the like. which can be disposed in the interior volume 112 between the expandable medium 130 and at least the portion of the workpiece 200. In one or more examples, the caul plate facilitates improved consolidation and improved surface conditions of the workpiece 200. In one or more examples, the bagging includes or takes the form of vacuum bagging, vacuum lamination bagging, or other sheet material that uses atmospheric pressure to clamp and hold the components of the workpiece 200 in place under the bagging during the fabrication process.

As illustrated in Fig. 1, in one or more examples, the system 100 includes a heater 162. The heater 162 is in thermal communication with the expandable medium 130. In one or more examples, the heater 162 is configured to heat the expandable medium 130 to an activation temperature in which the expandable medium 130 expands within the interior volume 112 to apply the positive pressure 254 to the workpiece 200. In one or more examples, the heater 162 is configured to heat the workpiece 200 to a desired processing (e.g., curing, consolidating, or bonding) temperature. In one or more examples, the heater 162 is an internal heater and is configured to be disposed within the interior volume 112 with the expandable medium 130. In one or more examples, the heater 162 is an external heater and is configured to be disposed outside of the constraining container 110. In one or more examples, the heater 162 is integrated in the constraining container 110 and/or the expandable medium 130, for example, using smart susceptor heating elements. The heater 162 can take any suitable form or include any suitable heating device. In various examples in which the expandable medium 130 is thermally activated to expand, the constraining container 110 can be heated externally. Alternatively, or in addition, the system 100 can include one or more heat-generating substances configured to heat the expandable medium 130 to a predetermined temperature at which the expandable medium 130 will expand.

In one or more examples, at least a portion of the constraining container 110 is thermally reflective. In one or more examples, at least one of the container walls 140 forming the cover 116 (e.g., cover sections 150) and/or the base 114 is thermally reflective. In one or more examples, at least a portion of an interior surface of the constraining container 110 includes or is coated with a thermally reflective material. Thermal reflectivity facilitates improved heating of the expandable medium 130 to activate expansion of the expandable medium 130 during the fabrication process.

As illustrated in Figs. 1 and 3-11, in one or more examples, the system 100 includes various combinations of elements, including one or more of the constraining container 110, the pressure-triggered coupling 122, the pressure plug 172, the tensioner 190, the viewport 182, the pressure-responsive shutter 184, and the expandable medium 130. The constraining container 110 is configured to enclose at least a portion of a workpiece 200 to be processed and includes a plurality of the container walls 140 that form the interior volume 112. The pressure-triggered coupling 122 is configured to secure two of the container walls 140 together and is configured to release the two of the container walls 140 upon the interior pressure 250 of the interior volume 112 reaching the trigger pressure 252. The pressure plug 172 is coupled to the one of the container walls 140 and is movable relative to the one of the container walls 140 such that a portion of the pressure plug 172 is disposed in the interior volume 112 to modify the interior volume 112. The tensioner 190 is configured to selectively apply a tension between two of the container walls 140 to control the interior pressure 250. The viewport 182 is formed in one of the container walls 140. The pressure-responsive shutter 184 is configured to cover the viewport 182 upon the interior pressure 250 of the interior volume 112 of the constraining container 110 reaching the processing pressure 260. The expandable medium 130 is configured to be disposed within the interior volume 112 between at least a portion of the container walls 140 and at least a portion of the workpiece 200 and is configured to expand such that the expandable medium 130 applies a positive pressure 254 to the container walls 140 and the workpiece 200.

Referring now to Fig. 2, by way of examples, present disclosure is also directed to a method 1000 for processing the workpiece 200, also referred to herein as a processing method. The following are examples of the method 1000, according to the present disclosure. In one or more examples, the method 1000 is implemented using the system 100 (Figs. 1 and 3-13). Examples of the method 1000 include a number of elements, steps, operations, or processes. Not all of the elements, steps, operations, or processes described or illustrated in one example are required in that example. Some or all of the elements, steps, operations, or processes described or illustrated in one example can be combined with other examples in various ways without the need to include other elements, steps, operations, or processes described in those other examples, even though such combination or combinations are not explicitly described or illustrated by example herein.

In one or more examples, the method 1000 includes a step of enclosing 1002 the workpiece 200. At least a portion of the workpiece 200 is situated in the interior volume 112 and is enclosed within the constraining container 110.

In one or more examples, the method 1000 includes a step of applying 1004 the expandable medium 130. The expandable medium 130 is applied (e.g., deposited or disposed) within the interior volume 112 between at least a portion of the constraining container 110 and at least a portion of the workpiece 200.

In one or more examples, the method 1000 includes a step of securing 1006 the constraining container 110. The constraining container 110 is secured in the closed configuration using the pressure-triggered coupling 122 (e.g., one or more of the pressure-triggered couplings 120). In one or more examples, the constraining container 110 is also secured in the closed configuration by one or more of the fasteners 142. In one or more examples, the step of securing 1006 includes a step of assembling the constraining container 110 using the container walls 140, for example, to form the base 114 and the cover 116 (e.g., cover sections 150). In these examples, the constraining container 110 is assembled using some combination of the pressure-triggered coupling 122 and the fastener 142.

In one or more examples, the method 1000 includes a step of expanding 1008 the expandable medium 130. The expandable medium 130 is expanded to increase the interior pressure 250 of the constraining container 110 and to apply the positive pressure 254 to the workpiece 200 for processing. As such, the method 1000 includes a step of applying 1010 the positive pressure 254 to at least the portion of the workpiece 200 and a step of processing 1012 the workpiece 200 in response to applying the positive pressure 254.

In one or more examples, the method 1000 includes a step of automatically releasing 1014 the constraining container 110. The constraining container 110 is automatically released using the pressure-triggered coupling 122 upon the interior pressure 250 of the constraining container 110 reaching the trigger pressure 252. In one or more examples, the constraining container 110 is released by the pressure-triggered coupling 122 at a predetermined point or pressure during processing. As an example, the cover layers 160 sequentially release as pressure subsequently increases throughout the processing operation. In another example, the constraining container 110 is released by the pressure-triggered coupling 122 in response to an overload pressure or as a safety protocol.

In one or more examples, the method 1000 includes a step of controlling 1016 the interior pressure 250 of the constraining container 110. In one or more examples, the step of controlling 1016 the interior pressure 250 includes or is achieved by a step of controlling the interior volume 112 of the constraining container 110. As examples, the interior volume 112 and/or the interior pressure 250 can be controlled using one of or a combination of the pressure plug 172, the tensioner 190, the different materials types or activation conditions of the expandable medium 130, and/or the volumetrically variant element 174.

In one or more examples, the method 1000 includes a step of indicating 1018 the interior pressure 250 of the constraining container 110. In one or more examples, the step of indicating 1018 the interior pressure 250 includes or is achieved by a step of indicating that the interior pressure 250 of the constraining container 110 reaches the processing pressure 260. As examples, the interior pressure 250 of the constraining container 110 can be indicated using one of or a combination of the scale 198 of the tensioner 190 and/or the inspection hatch 180.

Examples of the system 100 and method 1000 utilize expandable materials for composite curing, consolidating, and/or structural bonding and debulking, such as secondary bonding, with or without adhesive, such as for composite bonding under pressure (e.g., co-bonding), where at least one component of a bonded structure is pre-cured. Additionally, examples of the system 100 and method 1000 enable bonding of non-composite materials (e.g., metal, metallic alloy, ceramic, polymer, hybrid, metal matrix composites (MMC), ceramic matrix composites (CMC), polymer matrix composites (PMC), etc.) by using epoxy adhesive or any polymer adhesive (e.g., thermoset or thermoplastic).

In one or more examples, the step of processing 1012 includes the step of curing or consolidating the workpiece 200. In one or more examples, the step of processing 1012 includes a step of bonding the workpiece 200. In one or more examples, the step of bonding includes or takes the form of co-curing the workpiece 200. In one or more examples, the step of bonding includes or takes the form of co-bonding the workpiece 200. In one or more examples, the step of bonding includes or takes the form of secondarily bonding the workpiece 200.

In one or more examples, the system 100 and method 1000 facilitate co-curing to bond the workpiece 200 together. In these examples, the materials 210 of the workpiece 200 include an uncured composite material. In one or more examples, the uncured composite material is a thermoset composite material. In one or more examples, the uncured composite material is a thermoplastic composite material. In one or more examples, co-curing is achieved without adhesives. As an example, the workpiece 200 includes a first wet pre-preg cross-ply (e.g., first material) and a second wet pre-preg cross-ply (e.g., second material). In one or more examples, co-curing is achieved within an adhesive, such as an adhesive film. As an example, the workpiece 200 includes a first wet pre-preg cross-ply (e.g., first material), a second wet pre-preg cross-ply (e.g., second material), and an adhesive (e.g., third material) that is situated or disposed between the first and second wet pre-preg cross-plies. In one or more of the co-curing examples, the uncured composite material (e.g., thermoset composite material) has a cure temperature and a cure pressure. The expandable medium 130 is configured to expand when the temperature of the expandable medium 130 is raised to an activation temperature that is up to the cure temperature of the thermoset composite material. At the activation temperature, the expandable medium is configured to expand such that the positive pressure 254 is up to or at least the cure pressure. In one or more the co-curing examples, the uncured composite material (e.g., thermoplastic composite material) has a consolidation temperature and a consolidation pressure. The expandable medium 130 is configured to expand when the temperature of the expandable medium 130 is raised to the activation temperature that is up to the consolidation temperature of the thermoplastic composite material. At the activation temperature, the expandable medium 130 is configured to expand such that the positive pressure 254 is up to the cure pressure.

In one or more examples, the system 100 and method 1000 facilitate co-bonding to bond the workpiece 200 together. In these examples, at least one of the materials 210 of the workpiece 200 (e.g., first material) includes a cured composite material. At least another one of the materials 210 of the workpiece 200 (e.g., second material) includes the uncured composite material. In one or more examples, the uncured composite material is a thermoset composite material. In one or more examples, the uncured composite material is a thermoplastic composite material. In one or more examples, co-bonding is achieved with an adhesive, such as an adhesive film. As an example, the workpiece 200 includes a pre-cured laminate (e.g., first material), a wet pre-preg cross-ply (e.g., second material), and an adhesive (e.g., third material) that is situated or disposed between the pre-cured laminate and the wet pre-preg cross-ply. In one or more of the co-bonding examples, the uncured composite material (e.g., thermoset composite material) has the cure temperature and the cure pressure. The expandable medium 130 is configured to expand when the expandable medium 130 is raised to the activation temperature that is up to the cure temperature. At the activation temperature, the expandable medium 130 is configured to expand such that the positive pressure 254 is up to the cure pressure. In one or more of the co-bonding examples, the uncured composite material (e.g., thermoplastic composite material) has the consolidation temperature and the consolidation pressure. The expandable medium 130 is configured to expand when the temperature of the expandable medium 130 is raised to the activation temperature that is up to the consolidation temperature. At the activation temperature, the expandable medium is configured to expand such that the positive pressure 254 is up to the consolidation pressure.

In one or more examples, the system 100 and method 1000 facilitate secondary bonding to bond the workpiece 200 together. In these examples, the materials 210 of the workpiece 200 (e.g., first material and second material) include any suitable materials or material combinations, such as, but not limited to, metallic materials, metallic alloy materials, ceramic materials, polymer materials, hybrid materials, metal matrix composite materials, ceramic matrix composite materials, polymer matrix composite materials, and the like. In one or more examples, secondary bonding is achieved with an adhesive, such as an adhesive film. As an example, the workpiece 200 includes a first pre-cured laminate or material layer (e.g., first material), a second pre-cured laminate or material layer (e.g., second material), and an adhesive (e.g., third material) that is situated or disposed between the first and second pre-cured laminates or material layers. In one or more examples, the adhesive is situated between the first material and the second material. In these examples, the system 100, utilizing the adhesive, enables secondary bonding, co-bonding, or co-curing with adhesives of the first material and the second material. In one or more of the co-curing examples, co-bonding examples, and/or secondary bonding examples, the adhesive has at least one of the cure temperature and the cure pressure. The expandable medium 130 is configured to expand when the temperature of the expandable medium 130 is raised to the activation temperature that up to the cure temperature. At the activation temperature, the expandable medium 130 is configured to expand such that the positive pressure 254 is up to the cure pressure. In one or more examples, the cure temperature and/or the cure pressure of the uncured composite material and the adhesive are at least approximately the same. In one or more examples, the cure temperature and/or the cure pressure of the uncured composite material and the adhesive are different.

For the purpose of the present disclosure, the term "expandable," "expand," "expanding," and similar terms refer to an ability to be expanded or having the potential or capability of increasing in size and/or volume. A substance or discrete element that is expandable may be capable of increasing in size or volume symmetrically or asymmetrically. Where the expandable substance is capable of symmetric expansion, the substance undergoes a substantially equivalent degree of expansion along each axis. Where the expandable substance exhibits asymmetric expansion, the substance can undergo a greater relative expansion along a first axis, or first and second axes, than along a different axis. In various examples, the expandable medium 130 is configured to expand when a predetermined change is produced in the expandable medium 130. The predetermined change is typically a change in a physical property or chemical property or a combination thereof, and/or any other suitable property of the expandable medium 130 that is associated with expansion of the expandable medium 130. Unless otherwise specified, expansion of the expandable medium 130 refers to an increase in the volume of the expandable medium 130, surface area of the expandable medium 130, and/or spatial extent of the expandable medium 130 in one or more dimensions. As an example, the expandable medium 130 can be configured to expand when the temperature of the expandable medium 130 is raised from a lower temperature, such as an ambient temperature, to a predetermined higher temperature (e.g., activation temperature). Accordingly, in cases in which fabrication of the workpiece 200 includes raising the temperature of the workpiece 200, the expandable medium 130 expands inside the interior volume 112 during the fabrication process. The expandable medium 130 (e.g., while expanding or after expanded) exerts pressure against the interior of the constraining container 110 as well against or on the workpiece 200 during the bonding process.

For the purpose of the present disclosure, the term "contractable," "contract," "contracting," and similar terms refer to an ability to be contracted or having the potential or capability of decreasing in size and/or volume. A substance or discrete element that is contractable may be capable of decreasing in size or volume symmetrically or asymmetrically. Where the contractable substance is capable of symmetric contraction, the substance undergoes a substantially equivalent degree of contraction along each axis. Where the contractable substance exhibits asymmetric contraction, the substance can undergo a greater relative contraction along a first axis, or first and second axes, than along a different axis. In various examples, the expandable medium 130 is configured to contract when a predetermined change is produced in the expandable medium 130. The predetermined change is typically a change in a physical property or chemical property or a combination thereof, and/or any other suitable property of the expandable medium 130 that is associated with contraction of the expandable medium 130. Unless otherwise specified, contraction of the expandable medium 130 refers to a decrease in the volume of the expandable medium 130, surface area of the expandable medium 130, and/or spatial extent of the expandable medium 130 in one or more dimensions. As an example, the expandable medium 130 can be configured to decrease when the temperature of the expandable medium 130 is lowered from a higher temperature to a predetermined lower temperature.

In one or more examples, the expandable medium 130 is selected so that upon expansion within the interior volume 112, the expandable medium 130 exerts sufficient pressure to effectively compact the materials 210 of the workpiece 200 for proper curing or bonding. For some materials 210, an applied pressure of less than 1 atmosphere can be sufficient for bonding, while other materials 210 can be more effectively bonded at an applied pressure of 1 atmosphere or greater. In one or more examples, the expandable medium 130 is selected to exert sufficient pressure so that pressures can be applied that have typically previously required an autoclave (e.g., 1-5 atmospheres).

In one or more examples, the expandable medium 130 includes one or more different types, kinds, or compositions of expandable materials, such as the first expandable material 132, the second expandable material 136, etc. (e.g., different types or compositions of the expandable pellets). In these examples, each one of the different types of expandable materials is configured to expand and/or contract (e.g., to a predetermined volume) when heated to a predetermined temperature. In one or more examples, the composition of the different types of expandable medium 130 (e.g., different types of the expandable pellets) can be designed to achieve a desired relationship between the expanded volume of each of the types and the temperature of each of the types as a function of time. In one or more examples, the extent of the expansion of a given type or composition of the expandable medium 130 (e.g., expandable pellets) can be measured and recorded, as can the forces generated by the expansion. The formulation of the composition can therefore be varied in order to obtain a desired degree of expansion and expansion force. In this way, the amount of expandable medium 130 and/or the composition of the expandable medium 130 employed can be selected such that expansion and/or contraction within a known enclosed volume (e.g., interior volume 112) will apply a desired pressure upon the workpiece 200 at one or more stages of the fabrication process.

The expandable medium 130 can take any suitable form. In one or more examples, the expandable medium 130 is added to within the constraining container 110, for example, as pellets, beads, grains, powder, or foam. Alternatively, or in addition, the expandable medium 130 is added to the constraining container 110 as discrete portions of a solid or semi-solid, such as layers of the expandable medium 130 that can be draped across the portion of the workpiece 200. Layers of the expandable medium 130 can be added by adding individual instances of the encapsulating element (e.g., sacks or bags) filled with pellets, beads, or other smaller portions of the expandable medium 130. Although Figs. 3-13 depict the expandable medium 130 as a plurality of the expandable pellets, this is a representative depiction and should not be considered to limit the structure or configuration of the expandable medium 130. In various examples, the expandable medium 130 is added to the interior volume 112 while in the unexpanded state. As illustrated, prior to and/or during the fabrication process, the expandable medium 130 is made to expand (e.g., to increase in volume) to at least partially fill the interior volume 112, such that the expandable medium 130 (in the expanded state) applies positive pressure 254 directly or indirectly to at least some surfaces of the constraining container 110 as well as at least some surface (e.g., outer surfaces) of the workpiece 200. The pressure exerted by the expandable medium 130 as it expands thereby helps to compress and consolidate the portion of the workpiece 200 as it is processed. In various examples, the expandable medium 130 is configured to expand (e.g., to a predetermined volume and/or pressure) when a predetermined change is produced in an attribute 168 of the expandable medium 130 (e.g., in the unexpanded state). In one or more examples, the expandable medium 130 is applied (e.g., inserted or added) within the interior volume 112 of the constraining container 110 in the unexpanded state. The predetermined change is produced in the attribute 168 of the expandable medium 130 in the unexpanded condition, while the expandable medium 130 (in the unexpanded condition) is within the interior volume 112. The expandable medium 130 expands in response to the produced predetermined change. The attribute 168 of the expandable medium 130 can be a physical and/or chemical attribute. In one or more examples, the expandable medium 130 is configured to expand in volume when it interacts with water. As an example, the expandable medium 130 is or includes a desiccant, the desiccant can increase in volume as water is absorbed. For example, anhydrous calcium sulfate (anhydrite) exhibits an increase in volume of approximately sixty one percent (61%) when it absorbs water to form gypsum. In these examples, water can be added to the expandable medium 130 directly, such as by adding liquid water or water vapor to the interior of the constraining container 110. Alternatively, or in addition, water or water vapor can be generated within the constraining container 110 itself, for example by an appropriate chemical reaction. In one or more examples, the predetermined change in the attribute 168 of the expandable medium 130 includes a change in the temperature of expandable medium 130 and/or the temperature of one or more portions of the expandable medium 130. Accordingly, producing the predetermined change in the attribute 168 of expandable medium 130 can include raising the temperature of the unexpanded expandable element from a lower temperature, such as an ambient temperature (e.g., room temperature), to at least a predetermined temperature greater than the initial or ambient temperature (e.g., the predetermined temperature is a number of degrees above the ambient temperature suitable to produce a predetermined expansion of the expandable element). The expandable element then undergoes thermal expansion as a result of the increase in temperature. In one or more examples, the expandable medium 130 is a thermally activated expandable element. In these examples, the thermally activated expandable element is configured to expand when the temperature of the expandable medium 130 is raised to at least a predetermined temperature. Alternatively, or in addition, expanding the expandable medium 130 by heating the expandable medium 130 to at least a predetermined temperature produces a predetermined pressure against the workpiece 200. Typically, the predetermined pressure is a pressure sufficient to adequately cure the composite material. In one or more examples, the predetermined change produced in the attribute 168 of the expandable medium 130 is a combination of two or more properties of the expandable medium 130, such as a ratio or a product of quantitative values associated with properties of the expandable medium 130, such as two materials that have different coefficients of thermal expansion. In various examples, the process of fabricating the workpiece 200 includes producing the predetermined change in the attribute 168 of the expandable medium 130. In one or more examples, expansion of the expandable medium 130 occurs automatically during the fabricating process. For example, the attribute 168 can be a temperature of the expandable medium 130, and heat that is applied during the fabricating process produces the predetermined change in the temperature of the expandable medium 130. That is, heat applied to the workpiece 200 during the bonding process raises the temperature of the expandable medium 130 to at least a predetermined temperature associated with a desired volume and/or desired increase in volume. One or more properties of the expandable medium 130 can be designed such that the temperature change induced in the expandable medium 130 during fabrication of the workpiece 200 causes the expandable medium 130 to expand a desired predetermined amount as a result of thermal expansion. Alternatively, or additionally, causing the expandable medium 130 to expand can require additional steps beyond those required to cure the workpiece 200. As an example, causing the expandable medium 130 to expand can include applying an electric field, injecting a liquid, gas, and/or another suitable material, and/or inducing any other suitable change in the expandable medium 130. In various examples, the expandable medium 130 is thermally expandable and includes any material capable of undergoing expansion when the predetermined temperature is reached. In a particular example, a family of plastic polymers capable of softening when heated are called thermoplastic materials. When heated above its glass transition temperature and below its melting point, a solid thermoplastic material softens, becoming a viscous liquid. In this state, thermoplastics can be reshaped, and more specifically, can be expanded. A variety of classes of thermoplastic materials are known, including acrylic polymers, acrylonitrile butadiene styrene (ABS) polymers, nylon polymers, polylactic acid (PLA) polymers, polybenzimidazole polymers, polycarbonate polymers, polyether sulfone (PES) polymers, polyetherimide (PEI) polymers, polyethylene (PE) polymers, polyphenylene oxide (PPO) polymers, polyphenylene sulfide (PPS) polymers, polyvinyl chloride (PVC) polymers, polyvinylidene fluoride (PVDF) polymers, and polytetrafluoroethylene (PTFE) polymers, among others. In particular, the expandable medium 130 that includes acrylonitrile butadiene styrene (ABS) polymers can exhibit favorable physical properties when used in conjunction with the examples described herein. In one or more examples, the expandable medium 130 (e.g., the expandable pellets) can additionally include a blowing agent. The blowing agent is selected so that, when heated to at least a predetermined temperature, it forms a plurality of holes, pockets, or voids within the material of the expandable medium 130, such that the volume of the expandable medium 130 increases. As an example, an appropriate blowing agent can be an inert gas that is permeated into the expandable medium 130 under pressure. Such a blowing agent can be configured to expand in a plurality of locations within the expandable medium 130 when the temperature of the expandable medium 130 is increased from an ambient or initial temperature to a predetermined higher temperature, and the expanded gas forms holes, pockets, or voids within the pellet. A blowing agent, if present, can be applied to the expandable medium 130 prior to heating. In examples in which the expandable medium 130 includes a blowing agent, the blowing agent can be any appropriate substance capable of producing the desired degree of expansion. The blowing agent may include a physical blowing agent such as a chlorofluorocarbon, a hydrochlorofluorocarbon, a hydrocarbon, or liquid CO2, among others. Alternatively, or in addition, the blowing agent may include a chemical blowing agent selected to react with one or more components of the expandable medium 130, such as isocyanate and water for polyurethane, azodicarbonamide for vinyl, hydrazine and other nitrogen-based materials for thermoplastic and elastomeric foams, and sodium bicarbonate for thermoplastic foams, among others. In examples in which the expandable medium 130 includes a blowing agent, the blowing agent can include a foaming agent. In these examples, the blowing agent can be selected to form a gas, the foaming agent can be a material that facilitates formation of a foam, such as for example, a surfactant. Suitable foaming agents can include sodium laureth sulfate, sodium lauryl ether sulfate (SLES), sodium lauryl sulfate (also known as sodium dodecyl sulfate or SDS), and ammonium lauryl sulfate (ALS), among others. During the process of fabricating the workpiece 200, the expandable medium 130 is made to expand from the unexpanded state to the expanded state. In one or more examples, the expandable medium 130 is configured to expand in response to heat applied during curing or bonding. The expandable medium 130 expands to fill the interior volume 112 of the constraining container 110, such that expansion of the expandable medium 130 applies positive pressure to workpiece 200. In one or more examples, the expandable medium 130 are configured (e.g., formulated) so that it is at least partially deformable after, during, and/or before expansion. A degree of deformability allows the expandable medium 130 to squeeze into small gaps that might otherwise exist, for example, between pellets, between pellets and inner surfaces of the constraining container 110, and/or between pellets and the workpiece 200. Filling such gaps allows the expandable medium 130 to present a substantially smooth surface to the workpiece 200. In various examples, after the portion of the workpiece 200 has been fabricated, the constraining container 110 can be unsealed, or opened, as needed, and the expandable medium 130 can be removed. Although the expandable medium 130 is typically readily removable after the workpiece 200 has been fabricated, in some instances, the expandable medium 130 may remain expanded and tightly packed after the workpiece 200 has been processed and cooled, which may tend to impede removal. In such cases, the expandable medium 130 can be additionally configured in one or more ways to be more easily separated from the workpiece 200 and the constraining container 110. As an example, the expandable medium 130 can be configured so that the shape and/or size can be changed when desired, such that that it can be more readily extracted. For example, the expandable medium 130 can be configured to shrink when cooled, so that after the workpiece 200 is processed and cooled, the expandable medium 130 shrinks in the interior volume 112, thereby facilitating their removal. In one or more examples, the expandable medium 130 is modified to minimize sintering (self-adhesion) upon heating and expansion. Alternatively, or in addition, the expandable medium 130 is configured to minimize potential adhesion with surfaces, such as by coating the expandable pellets with a suitable agent configured to prevent adhesion and/or to facilitate separation. In one or more examples, a suitable agent for adding to the expandable medium 130 includes a lubricating agent. As an example, a lubricating agent can be added to the expandable pellets to decrease adhesion between the expandable pellets before and/or after volumetric expansion. A suitable lubricating agent is one that does not interfere with curing and/or bonding of the workpiece 200 and prevents the expandable pellets from substantially adhering to one another, to the constraining container 110, or to the components of the workpiece 200. Suitable lubricating agents can include liquids, powders, or combinations thereof. When added as a powder, a suitable lubricating agent can include a nano-powder. Alternatively, or in addition, suitable lubricating agents can include silicon-based materials, fluorinated polymers, or other substantially inert substances. For example, a suitable lubricating agent can include polytetrafluoroethylene (PTFE) powder, PTFE nano-powder, silicone, perfluoropolyether (PFPE), perfluoroalkylether (PFAE), perfluoropolyalkylether (PFPAE), and/or the like. Such a lubricant can be applied to the expandable pellets before the expandable pellets are added into the constraining container 110. Alternatively, or additionally, a suitable lubricant can be applied to the expandable pellets while they are disposed inside the constraining container 110. Coating at least some of the expandable pellets with a suitable lubricant can include mixing the lubricant with the plurality of pellets and/or pouring the lubricant over the plurality of pellets. Additionally, or alternatively, at least a subset of the plurality of expandable pellets can be coated with a desired lubricant and then mixed in with a plurality of uncoated pellets. In one or more examples, crystallinity and/or semi-crystallinity along the outer surfaces of the expandable pellets can help to prevent the pellets from sintering to each other. In one or more examples, at least some of the expandable pellets are configured, such as by preprocessing, to have regions of crystallinity along outer surfaces of the pellets, such that adding the expandable medium 130 includes adding a plurality of the expandable pellets having surface regions of increased crystallinity in order to decrease adhesion between pellets before and/or after volumetric expansion of the expandable pellets. In one or more examples, the expandable pellets can be employed where outer surfaces of the pellets exhibit a high degree of crystallinity (e.g., a high percentage of the volume of regions of each pellet near the outer surface is crystalline). The crystallinity can be induced in the expandable pellets by controlling one or more factors including the material composition of the pellets, the production temperatures to which the pellets are heated during production, the times for which the pellet temperatures are maintained at the production temperatures during production, electric and/or magnetic fields applied during production, distribution of a blowing agent in the pellets, composition and/or concentration of blowing agent, and so on. The outer surfaces of the expandable pellets can be crystalline before foaming, during foaming, and/or after foaming.

In one or more examples, the system 100 includes additional elements configured to modify or moderate the pressure applied by the expandable medium 130, such as, but not limited to, one or more instances of the volumetrically invariant element 176 (e.g., a substantially noncompressible element), and/or one or more instances of the volumetrically variant element 174 (e.g., an expandable and contractible element), which can be increased in volume before or during fabrication and/or reduced in volume after fabrication.

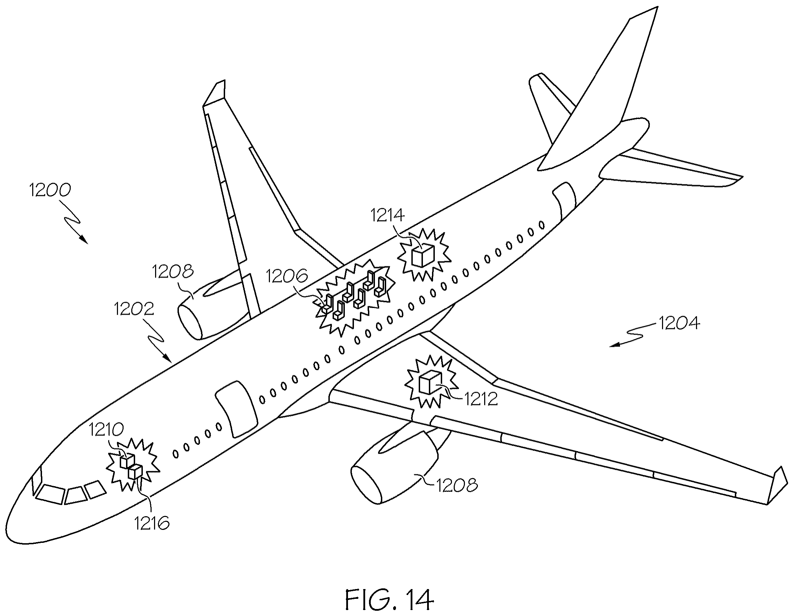

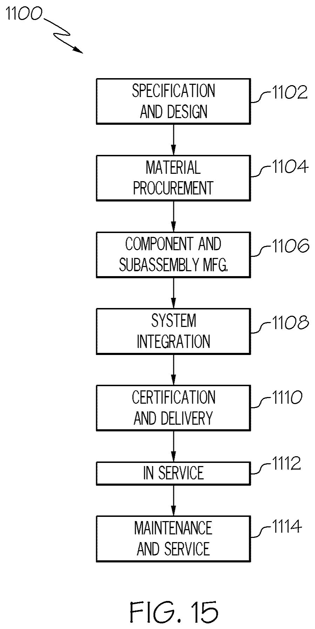

Referring now to Figs. 14 and 15, examples of the system 100 and the method 1000, described herein, may be related to, or used in the context of an aircraft 1200, as schematically illustrated in Fig. 14, and an aerospace manufacturing and service method 1100, as shown in the flow diagram of Fig. 15. As an example, the aircraft 1200 and/or the manufacturing and service method 1100 may include or utilize a component, part, or workpiece that is fabricated or repaired using the system 100 and/or according to the method 1000.

As illustrated in Fig. 14, which illustrates an example of the aircraft 1200. The aircraft 1200 can be any aerospace vehicle or platform. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems 1216, such as, but not limited to, communications systems, avionics systems, software distribution systems, network communications systems, passenger information/entertainment systems, guidance systems, radar systems, weapons systems, and the like. The aircraft 1200 can have any number of components or parts that are fabricated or repaired using the system 100 and/or according to the method 1000.

As illustrated in Fig. 15, during pre-production of the aircraft 1200, the manufacturing and service method 1100 includes specification and design 1102 of the aircraft 1200 and material procurement 1104. During production of the aircraft 1200, component and subassembly manufacturing 1106 and system integration 1108 of the aircraft 1200 take place. Thereafter, the aircraft 1200 goes through certification and delivery 1110 to be placed in service 1112. Routine maintenance and service 1114 includes modification, reconfiguration, refurbishment, etc. of one or more systems of the aircraft 1200.

Each of the processes of the manufacturing and service method 1100 illustrated in Fig. 15 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

Examples of the system 100 and the method 1000, shown and described herein, may be employed during any one or more of the stages of the manufacturing and service method 1100 shown in the flow diagram illustrated by Fig. 15. In an example, components of the aircraft 1200 can be fabricated using the system 100 and/or according to the method 1000 during a portion of component and subassembly manufacturing 1106 and/or system integration 1108. Further, components of the aircraft 1200 can be fabricated using the system 100 and/or according to the method 1000 while the aircraft 1200 is in service 1112. Also, components of the aircraft 1200 can be fabricated using the system 100 and/or according to the method 1000 during system integration 1108 and certification and delivery 1110. Similarly, components of the aircraft 1200 can be fabricated using the system 100 and/or according to the method 1000 while the aircraft 1200 is in service 1112 and during maintenance and service 1114.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of," when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "/" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1 and 3-14, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1 and 3-14, referred to above, need be included in every example and not all elements, features, and/or components described herein are necessarily depicted in each illustrative example. Accordingly, some of the elements, features, and/or components described and illustrated in Figs. 1 and 3-14 may be combined in various ways without the need to include other features described and illustrated in Figs. 1 and 3-14, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1 and 3-14, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1 and 3-14, and such elements, features, and/or components may not be discussed in detail herein with reference to each of Figs. 1 and 3-14. Similarly, all elements, features, and/or components may not be labeled in each of Figs. 11 and 3-14, but reference numerals associated therewith may be utilized herein for consistency.

In Figs. 2 and 15, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 2 and 15 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need to be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but does not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100 and the method 1000 have been shown and described, modifications may occur to those skilled in the art upon reading the specification. The present application includes such modifications and is limited only by the scope of the claims.

## Claims

1. A system (100) comprising:
a constraining container (110) comprising an interior volume (112), wherein the constraining container (110) is configured to enclose at least a portion of a workpiece (200) to be processed;
a pressure-triggered coupling (122) configured to secure the constraining container (110) in a closed configuration and configured to release the constraining container (110) upon an interior pressure (250) of the interior volume (112) of the constraining container (110) reaching a trigger pressure (252); and
an expandable medium (130) configured to be disposed within the interior volume (112) between at least a portion of the constraining container (110) and at least a portion of the workpiece (200) and configured to expand such that the expandable medium (130) applies a positive pressure (254) to the constraining container (110) and the workpiece (200).

2. The system (100) of Claim 1, wherein:
the constraining container (110) further comprises:
a base (114); and
cover (116) coupled to the base (114); and
the cover (116) comprises a plurality of cover sections (150); and
two of the cover sections (150) are coupled together by the pressure-triggered coupling (122) such that the at least two of the cover sections (150) release from each other upon the interior pressure (250) reaching the trigger pressure (252),
optionally wherein:
the cover (116) comprises a plurality of cover layers (160);
each one of the cover layers (160) is coupled to the base (114);
each one of the cover layers (160) and the base (114) form one of a plurality of interior volumes (118) of the constraining container (110); and
each one of the cover layers (160) comprises two of the cover sections (150) coupled together one of a plurality of pressure-triggered couplings (120) such that the two of the cover sections (150) of each one of the cover layers (160) sequentially release from each other upon each one of a plurality of interior pressures (256) reaching one of a plurality of trigger pressures (258),
optionally wherein:
a first one of the pressure-triggered couplings (120) couples the two of the cover sections (150) of a first one of the cover layers (160) and is configured to release the two of the cover sections (150) upon a first one of the interior pressures (256) reaching a first one of the trigger pressures (258);
a second one of the pressure-triggered couplings (120) couples the two of the cover sections (150) of a second one of the cover layers (160) and is configured to release the two of the cover sections (150) upon a second one of the interior pressures (256) reaching a second one of the trigger pressures (258); and
the first one of the trigger pressures (258) and the second one of the trigger pressures (258) are different.

3. The system (100) of Claim 1 or 2, wherein at least one of the cover sections (150) is rigid.

4. The system (100) of any of Claims 1-3, wherein at least one of the cover sections (150) is flexible.

5. The system (100) of any of Claims 1-4, wherein the pressure-triggered coupling (122) comprises a shear coupling (126).

6. The system (100) of any of Claims 1-5, wherein the pressure-triggered coupling (122) comprises a linear tension coupling (128).

7. The system (100) of any of Claims 1-6, further comprising a tensioner (190) configured to selectively apply a tension between two of the cover sections (150) to control the interior pressure (250),
optionally wherein the tensioner (190) is further configured to indicate the interior pressure (250).

8. The system (100) of any of claims Claim 1-7, further comprising a pressure plug (172) coupled to the constraining container (110) such that a portion of the pressure plug (172) is disposed in the interior volume (112),
wherein the pressure plug (172) is movable relative to the constraining container (110) to modify the interior volume (112).

9. The system (100) of any of Claims 1-8, further comprising an inspection hatch (180) comprising:
a viewport (182) formed in the constraining container (110); and
a pressure-responsive shutter (184) configured to cover the viewport (182) upon the interior pressure (250) of the interior volume (112) of the constraining container (110) reaching a processing pressure (260),
optionally wherein the pressure-responsive shutter (184) comprises:
a panel (186) coupled to the constraining container (110) and movable relative to the constraining container (110) to cover the viewport (182); and
a pressure-release fastener (188) configured to hold the panel (186) away from the viewport (182) and configured to release the panel (186) upon the interior pressure (250) of the interior volume (112) of the constraining container (110) reaching the processing pressure (260).

10. The system (100) of any of Claims 1-9, wherein:
the expandable medium (130) comprises:
a first expandable material (132) configured to expand to a first expanded volume (134); and
a second expandable material (136) configured to expand to a second expanded volume (138); and
the first expanded volume (134) and the second expanded volume (138) are different.

11. The system (100) of any of Claims 1-6 and 10, wherein
the interior volume (112) is formed by a plurality of container walls (140);
the pressure-triggered coupling (122) is configured to secure two of the container walls (140) together and configured to release the two of the container walls (140) upon the interior pressure (250) of the interior volume (112) reaching the trigger pressure (252);
the system (100) further comprises:
a pressure plug (172) coupled to the one of the container walls (140) and movable relative to the one of the container walls (140) such that a portion of the pressure plug (172) is disposed in the interior volume (112) to modify the interior volume (112);
a tensioner (190) configured to selectively apply a tension between two of the container walls (140) to control the interior pressure (250);
a viewport (182) formed in one of the container walls (140); and
a pressure-responsive shutter (184) configured to cover the viewport (182) upon the interior pressure (250) of the interior volume (112) of the constraining container (110) reaching a processing pressure (260); wherein
the expandable medium (130) is configured to be disposed within the interior volume (112) between at least a portion of the container walls (140) and at least a portion of the workpiece (200) and is configured to expand such that the expandable medium (130) applies the positive pressure (254) to the container walls (140) and the workpiece (200).

12. A method (1000) for processing a workpiece (200), the method (1000) comprising:
enclosing at least a portion of the workpiece (200) in an interior volume (112) of a constraining container (110);
applying an expandable medium (130) in the interior volume (112) between at least a portion of the constraining container (110) and at least a portion of the workpiece (200);
securing the constraining container (110) in a closed configuration using a pressure-triggered coupling (122);
expanding the expandable medium (130) to increase an interior pressure (250) of the constraining container (110) and apply a positive pressure (254) to the workpiece (200); and
automatically releasing the constraining container (110) using the pressure-triggered coupling (122) upon the interior pressure (250) of the constraining container (110) reaching a trigger pressure (252).

13. The method (1000) of Claim 12, further comprising controlling at least one of the interior pressure (250) of the constraining container (110) and the interior volume (112) of the constraining container (110).

14. The method (1000) of Claim 12 or 13, further comprising indicating the interior pressure (250) of the constraining container (110).

15. The method (1000) of any of Claims 12-14, further comprising indicating that the interior pressure (250) of the constraining container (110) reaches a processing pressure (260).
